# DEMANDE DE BREVET EUROPEEN

(11) **EP 0 589 769 A1**
(43) Date de publication de la demande: **30.03.1994**
(21) Numéro de dépôt: 93402290.6
(22) Date de dépôt: 20.09.1993
(51) Int. Cl.: G01N 21/88

(54) **Dispositif de contrôle de qualité d'un gainage du type polyéthylène**

(30) Priorité: 21.09.1992 FR 9211207
(71) Demandeur: ALCATEL CABLE, F-92100 Clichy (FR)
(72) Inventeur: Dubrulle, Marc, F-62360 Pont de Briques (FR)
(74) Mandataire: Buffiere, Michelle

(57) **Abrégé**

Le dispositif de contrôle de qualité d'un gainage du type polyéthylène d'un échantillon est basé sur la transparence du polyéthylène à l'infrarouge.

Il est caractérisé en ce qu'il comporte une cuve en verre (5) contenant un bain (4) d'indice de réfraction proche du polyéthylène et recevant ledit échantillon (1), un ensemble d'éclairage (11) dudit échantillon à l'aide d'un faisceau d'éclairage (12) d'angle d'ouverture limité (a) traversant un dépoli (10) à lobes de diffusion étroits, et un ensemble de détection infrarouge (15, 16) du faisceau traversant l'échantillon.

Application: contrôle du gainage de boîtes de jonction et de boîtiers de répéteur.

## Description

La présente invention porte sur un dispositif de contrôle de qualité d'un gainage du type polyéthylène, à partir d'une détection d'éventuels défauts dans le gainage.

Un tel contrôle est effectué sur tous les gainages d'isolation. Il est particulièrement sévère sur le gainage du type polyéthylène des liaisons sous-marines. Il est notamment réalisé impérativement, avant la pose d'une telle liaison ou après toute réparation, sur les parties surmoulées du gainage et les zones d'interface de ces parties surmoulées.

De manière connue, une liaison sous-marine est constituée de câbles de ligne raccordés directement les uns aux autres dans des boîtes de jonction ou à travers des répéteurs. Ces répéteurs sont en boîtiers et équipés de deux câbles d'accès, eux-mêmes raccordés aux câbles de lignes dans les boîtes de jonction ou analogues et couramment appelées boîtes d'extrémité. Les boîtiers de répéteurs et les boîtes de jonction sont individuellement protégées par des gaines surmoulées en polyéthylène, assurant avec les gaines des câbles concernés, la continuité du gainage de la liaison, pour son étanchéité et son isolation électrique vis-à-vis de l'eau de mer.

Les gaines de ces câbles de ligne et d'accès aux répéteurs, également en polyéthylène, sont extrudées et sont contrôlées avant l'utilisation de ces câbles. Ces contrôles sont souvent effectués par des tests électriques, en faisant passer un courant dans les câbles. Ils donnent lieu à des claquages à travers la gaine, lors de défauts dans celle-ci. Ces contrôles sont donc de type destructif.

Les gaines surmoulées sur les boîtiers de répéteurs sont contrôlés dès que ces répéteurs sont équipés de leurs câbles d'accès, comme le sont les gaines surmoulées sur les boîtes de jonction dès le raccordement des câbles concernés.

Les contrôles de ces gaines surmoulées et de leurs interfaces avec les gaines des câbles sont effectués jusqu'à présent aux rayons X, pour mettre en évidence de possibles inclusions métalliques dans ces gaines ou aux interfaces.

Ce mode de contrôle aux rayons X est particulièrement dangeureux pour les opérateurs et exige des opérateurs hautement qualifiés. Il est coûteux et est long à mettre en oeuvre. Il est en outre insensible à des défauts non métalliques, tels que "trous" ou bulles d'air par exemple, qui peuvent comme les inclusions métalliques donner lieu à des claquages, lors de test électriques avant la pose ou la mise en service de la liaison.

On connaît un mode d'inspection du gainage en polyéthylène des câbles électriques basé sur la transparence du polyéthylène aux infrarouges.

Les dispositifs connus utilisent un laser émettant une lumière cohérente dans le proche infra rouge, pour un contrôle non destructif de qualité d'un gainage du type polyéthylène, en détectant de possibles défauts quelle que soit la nature de ces défauts.

La présente invention a pour but de permettre une résolution optimale des défauts d'un gainage surmoulé sur un boîtier d'équipements ou de jonction de câbles ou du gainage câbles, qui soit simple de mise en oeuvre.

Elle a pour objet un dispositif de contrôle de qualité d'un gainage, du type polyéthylène, dans lequel le gainage recouvre un élément de nature différente en formant un échantillon à contrôler, comportant :
- un ensemble d'éclairage, dirigeant un faisceau lumineux contenant des radiations infrarouges, dit faisceau incident, sur ledit échantillon, transversalement audit échantillon et au moins la hauteur de celui-ci, et
- un ensemble de détection infrarouge, recevant le faisceau incident ayant traversé ledit échantillon et dit faisceau d'analyse,
- lesdits ensembles d'éclairage et de détection étant alignés optiquement et étant de part et d'autre dudit échantillon,

caractérisé en ce qu'il comporte, en outre, un dépoli à lobes de diffusion étroits, associé audit ensemble d''éclairage et interposé sur ledit faisceau incident ainsi formé de lumière diffuse rentrant dans ledit échantillon.

Elle présente en outre au moins l'une des caractéristiques additionnelles suivantes:
- ledit ensemble d'éclairage comporte une source lumineuse, une fente et des moyens optiques, délivrant ledit faisceau avec un angle d'ouverture limité sur une longueur dite utile à contrôler dudit échantillon à travers ledit dépoli,
- l'angle d'ouverture est de préférence de 19° et le dépoli un filtre dit de Marata,
- ledit échantillon est monté dans une cuve transparente au faisceau incident et contenant un bain d'incide de réfraction proche de celui dudit polyéthylène, dans lequel est plongé ledit échantillon.

Les caractéristiques et avantages de la présente invention ressortiront de la description de modes de réalisation donnés à titre d'exemples et illustrés dans les dessins ci-annexés. Dans ces dessins:
- la figure 1 représente schématiquement un mode préféré de réalisation du dispositif de contrôle selon la présente invention,
- la figure 2 représente schématiquement une variante de réalisation de ce dispositif selon la figure 1.

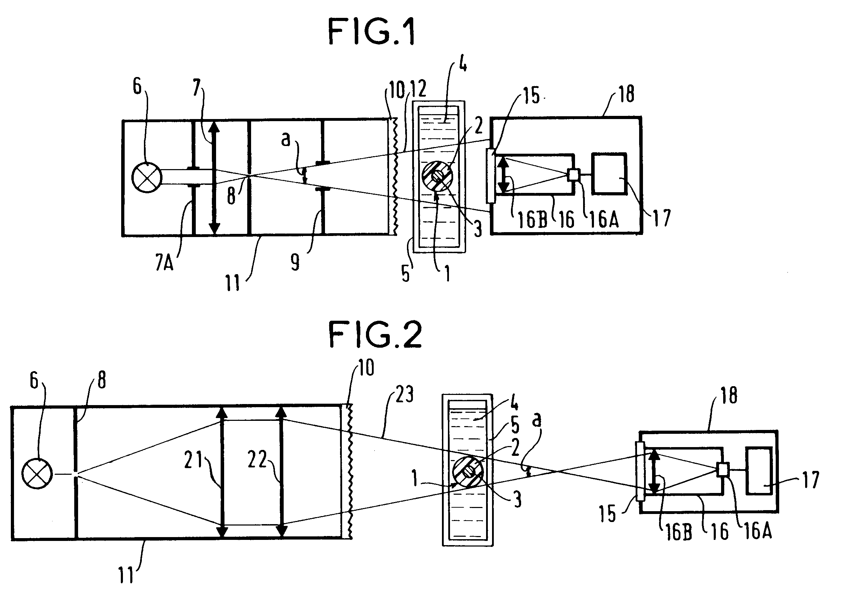

Les dispositifs illustrés dans ces figures 1 et 2 assurent le contrôle de la qualité d'un gainage en polyéthylène, ainsi que des éventuels interfaces avec un autre gainage, également en polyéthylène. Ce gainage peut être celui d'un câble ou de préférence celui surmoulé sur une boîte de jonction de deux câbles ou sur un boîtier de répéteur.

L'élément gainé de polyéthylène dont la qualité est à contrôler est appelé ci-après échantillon. Ce contrôle est basé sur la transparence du polyéthylène aux radiations infrarouges.

Dans les figures 1 et 2 cet échantillon 1 est montré en coupe et formé d'une gaine 2 à contrôler qui recouvre un élément métallique 3. Pour ce contrôle, l'échantillon est monté dans un bain 4 contenu dans une cuve en verre 5. Ce bain est choisi d'indice de réfraction proche de celui du polyéthylène, il est en particulier constitué par de l'huile de vaseline. L'échantillon plongé dans ce bain est porté par deux des parois opposées de la cuve qu'il traverse de manière étanche et dans laquelle il est rotatif sur lui-même et peut être entraîné en translation, selon le type d'échantillon concerné.

En se référant à la figure 1, le dispositif comporte, outre la cuve 5 et le bain 4 qu'elle contient, un ensemble d'éclairage constitué par une source de lumière large spectre 6, une optique d'éclairage 7 à obturateur associé 7A, une fente 8, un diaphragme 9 et un dépoli à lobes de diffusion étroits 10. L'ensemble d'éclairage est monté d'un côté de la cuve et en regard de l'échantillon 1 dans un boîtier dit d'éclairage 11, sur lequel le dépoli forme la face d'éclairage. Il délivre un faisceau lumineux 12 d'éclairage de l'échantillon, d'angle d'ouverture limité, noté a, qui éclaire l'échantillon sur toute sa hauteur et, ceci sur la longueur dite utile à contrôler de cet échantillon.

Le dispositif comporte également en regard de l'échantillon mais de l'autre côté de la cuve 5, un filtre infrarouge 15, une caméra infrarouge de détection 16, et un système d'impression 17 couplée à cette caméra, formant un ensemble 18 de détection et d'impression d'image. Le filtre et la caméra fonctionnent de préférence dans le proche infrarouge, auquel correspond la meilleure bande de transmission du polyéthylène. Cette caméra est avantageusement une barrette 16A, à éléments de couplage de charge et dite du type CCD, qui est couplée à un objectif d'entrée 16B. Le filtre est monté sur une plaque limitant l'observation et la détection d'image, sensiblement à la dimension transversale maximale de cet échantillon et à sa longueur utile à contrôler.

Le système d'impression est avantageusement une imprimante thermique.

Dans l'ensemble d'éclairage monté dans le boîtier 11, l'optique d'éclairage forme une image de la source 6 sur la longueur de la fente 8, qui assure ainsi le rôle de source linéaire étroite et délivre un faisceau d'éclairage 12 alors divergent. L'angle d'ouverture de celui-ci centré sur la largeur de la fente source 8 et limité par le diaphragme 9 permet l'adaptation de l'incidence des rayons du faisceau 12 qui rentrent dans le bain et l'échantillon pour l'obtention d'une diffusion limitée de lumière dans ceux-ci. Le choix d'une telle diffusion limitée de lumière dans le polyéthylène réduit les pertes de résolution et permet une mise en évidence de petits défauts sans pour autant assurer une analyse structurelle de la composition du bain et du polyéthylène éclairés.

Le bain 4 permet d'uniformiser l'épaisseur de polyéthylène traversée par le faisceau 12, en limitant les phénomènes de réfraction au niveau des dioptres formés par la surface extérieure du gainage. Le dépoli 10 à lobes de diffusion étroits assure lui-même une diffusion de lumière la plus proche possible de cette diffusion limitée dans le polyéthylène.

Les expérimentations effectuées par la demanderesse ont mis en évidence que cet angle d'ouverture limité doit rester inférieur à une trentaine de degrés et est de préférence de 19° avec un dépoli à lobes étroits dit du type dépoli ou filtre de Marata. La résolution atteinte dans ces conditions permet de détecter de petits défauts, de l'ordre de 0,1 mm.

Dans la variante selon la figure 2, les éléments identiques à ceux de la figure 1 ont été désignés sous leurs références précédentes. Les modifications apportées sont uniquement relatives au système d'éclairage et sont seules précisées ci-après.

Ces modifications consistent essentiellement dans le remplacement de l'optique d'éclairage interposée selon la figure 1 entre la source 6 et la fente 8 par des optiques de collimation et de focalisation 21 et 22, ici interposées entre la fente 8 et le diaphragme 9 et traitant le faisceau lumineux reçu de la source à travers la fente 7. Le faisceau d'éclairage 23, est toujours d'angle d'ouverture limité mais est convergent dans cette variante.

Le système d'éclairage ainsi modifié permet une plus grande concentration de la lumière transversant le polyéthylène sur l'objectif de la caméra, il est par contre plus encombrant que celui de la figure 1.

Ce dispositif optique de contrôle selon l'invention permet une détection très précise de la qualité d'un gainage, avec un excellent contraste près du bord interne de celui-ci. Il est peu encombrant et de réglages relativement simples. Il permet de déterminer les dimensions des défauts et de déduire leur nature telle que trou d'air, ou inclusion métallique, par exemple. Il est sans danger pour l'opérateur et n'exige aucune qualification spécifique particulière des opérateurs. Un contrôle complet du gainage est obtenu par rotation de l'échantillon dans le bain et, selon l'échantillon, par translation de celui-ci. Un contrôle complet du gainage d'un câble peut en variante être obtenu sans rotation du câble, à l'aide de deux dispositifs optiques, ou plus, qui sont montés l'un après l'autre sur le câble et sont décalés angulairement l'un relativement au suivant.

## Revendications

**1/** Dispositif de contrôle de qualité d'un gainage, du type polyéthylène, dans lequel le gainage recouvre un élément de nature différente en formant un échantillon à contrôler, comportant :
- un ensemble d'éclairage, dirigeant un faisceau lumineux contenant des radiations infrarouges, dit faisceau incident, sur ledit échantillon, transversalement audit échantillon et au moins la hauteur de celui-ci, et
- un ensemble de détection infrarouge, recevant le faisceau incident ayant traversé ledit échantillon et dit faisceau d'analyse,
- lesdits ensembles d'éclairage et de détection étant alignés optiquement et étant de part et d'autre dudit échantillon,
caractérisé en ce qu'il comporte, en outre, un dépoli à lobes de diffusion étroits (10), associé audit ensemble d''éclairage (6-9; 6, 8, 21, 22) et interposé sur ledit faisceau incident ainsi formé de lumière diffuse rentrant dans ledit échantillon (1).

**2)** Dispositif selon la revendication 1, caractérisé en ce que ledit ensemble d'éclairage comporte une source lumineuse (6), une fente-source (8) et des moyens optiques associés (7; 21, 22), délivrant ledit faisceau incident avec un angle d'ouverture limité (a) sur une longueur donnée et dite utile dudit échantillon (1) à travers ledit dépoli (10).

**3)** Dispositif selon la revendication 2, caractérisé en ce que ledit angle d'ouverture est sensiblement de 19°.

**4)** Dispositif selon l'une des revendications 1 à 3, caractérisé en ce que ledit dépoli est un filtre dit de Maratra.

**5)** Dispositif selon l'une des revendications 1 à 4, caractérisé en ce qu'il comporte, en outre une cuve (5), transparente au faisceau incident et contenant un bain (4), d'indice de réfraction proche de celui du polyéthylène, dans lequel est plongé ledit échantillon (1).
